# EUROPEAN PATENT APPLICATION

(11) **EP 3 238 535 A1**
(43) Date of publication of application: **01.11.2017**
(21) Application number: 17166449.3
(22) Date of filing: 13.04.2017
(51) Int. Cl.: A01K 5/01

(54) **BOWL STRUCTURE FOR ANIMAL FEEDING**

(30) Priority: 26.04.2016 IT UA20162866
(71) Applicant: Tortoricci, Katia, 37010 Pastrengo (VR) (IT)
(72) Inventor: Tortoricci, Katia, 37010 Pastrengo (VR) (IT)
(74) Representative: Laghi, Alberto

(57) **Abstract**

The present invention relates to a bowl (10) for feeding animals characterized in that it comprises
-a supporting tray (11) with a containment recess (12),
- at least one removable covering tray (13), which is contoured to cover at least part of said containment recess (12) and is adapted to contain solid or liquid food for an animal.

## Description

The present invention relates to a bowl for feeding animals.

Nowadays, in order to provide pets, and in particular dogs and cats, with food and water one or more bowls made of metal, preferably steel, are used, usually filled with the needed food or water.

Of sure, the bowl is one of the most important accessories that any domestic dog and cat needs.

In a home where a dog or cat lives, it is vitally important that there is a bowl for water and another bowl for food. In addition, it is necessary that the same bowl for both food and water is always used, so that the dog or cat becomes accustomed and can easily recognize them.

When the animal has completed the meal, it is a good hygiene habit to take the bowls, empty them from any leftovers, and wash the bowls; the washing operations must be carried out with care to avoid residues and the formation of encrustations that could cause the proliferation of bacteria harmful to the animal.

Metal bowls have the advantage of being easy to wash, and in addition they do not absorb odours, in contrast to those made of plastic or ceramic material.

They are preferred even under the hygiene point of view, since encrustations or moulds are difficult to form.

Metal bowls have the advantage of being very resistant, but they have a disadvantage that, if placed outside, they may overheat in summer and may be too cold in winter, thereby altering the contents.

As mentioned above, metallic bowls should be thoroughly washed every day, preferably whenever a meal is given, so as to keep them clean and hygienized.

In order to wash a metal bowl normal detergents may be used, however having in mind to carry out an accurate rinsing in order to eliminate any chemical residue.

The dog or cat bowl is one of the objects that comes into contact with the muzzle of the animal. This is why it is very important that it is hygienically clean for its health.

Coming several times a day with the muzzle of the animal, the bowl accumulates microorganisms, which then can return to the animal in a higher and more harmful amount. A dirty bowl leaved on the ground means allowing the bacteria to grow and multiply without problems, then becoming a serious danger to the health of the dog or cat.

For this reason, the bowl should be cleaned every day, especially if damp food is given in addition to kibbles.

The first thing to do to clean the dog or cat bowl is obviously to eliminate any residual food present on the surface.

Generally, a good cleaning operation of a bowl involves a first fast and general removal of food attached to the walls, for example by using a wet wipe or other similar cloth, followed by a disinfection step of the bowl itself with alcohol or other similar disinfectant for external use, for example, using a cotton swab dampened with disinfectant on the inside of the bowl, on the outside edges, and in every spot usually licked by the animal. Such cleaning should be done at least once a day, usually shortly after the animal has eaten; the more time passed, the more difficult the removing of the excess food is, allowing bacteria to grow and reproduce.

Accurate bowl cleaning is therefore essential to prevent most of the gastrointestinal problems of the animal. Leaving non-fresh food in the bowl increases the risk of spoiling the same; an animal could eat it anyway, getting the classic symptoms of intoxication such as nausea, vomiting, diarrhoea and abdominal pain.

A thorough cleaning of the bowl should be performed at least once a week by performing the steps of eliminating food residues, rubbing the walls by using a sponge and detergent, taking care to wash out all detergent residue, and carrying out the disinfection as described above. It is preferable to use hot water to facilitate removal of dirt and to create an inhospitable environment for microbial proliferation.

Before giving the bowl to the animal, it is necessary to allow some time to pass, so that any traces of disinfectant can be evaporated.

The bowl should always be well dried by using an absorbent paper, in order to avoid possible water stagnations that could lead to limestone formations, which, in the long run, would become detrimental to the health of the animal.

The known bowls made of metal material, though widespread and appreciated, are therefore very demanding in terms of maintenance, due to the numerous attentions and consequent cleaning activities described above, which are unavoidable and unpostponable to maintain the health of the animal that eat from these bowls.

The object of the present invention is to provide a simple and quick handling bowl for feeding animals, which eliminates most of the cleaning and maintenance operations required by the known metal bowls.

Within the scope of this task, an object of the invention is to provide a bowl that is less sensitive to outside environmental conditions when used outdoors.

Another object of the invention is to provide a bowl that can easily be handled in an intuitive way.

This aim, as well as these and other objects that will become most apparent hereinafter, are achieved by a bowl for feeding animals according to claim 1.

Further characteristics and advantages of the invention will become apparent from the description of three preferred, but not exclusive, embodiments of the bowl for feeding animals according to the invention, which are illustrated for indicative and not limitative purposes in the accompanying drawings, in which:
- Figure 1 shows a perspective view of a bowl according to the invention;
- Figure 2 is a perspective exploded view of a bowl according to the invention in a first embodiment thereof;
- Figure 3 shows a partially exploded perspective view of a method of using a bowl according to the invention in a first embodiment thereof;
- Figure 4 shows a top view of the bowl of Figure 3;
- Figure 5 shows a portion of the section according to the line V-V of Figure 4;
- Figure 6 shows a portion of the section according to the line VI-VI of Figure 4;
- Figure 7 is a cross-sectional view of a bowl according to the invention in a second embodiment;
- Figure 8 is a perspective view of a bowl according to the invention in the second embodiment;
- Figure 9 is a cross-sectional view of a bowl according to the invention in a third embodiment;
- Figure 10 is a perspective view of a bowl according to the invention in the third embodiment.

With reference to the aforementioned figures, a bowl according to the invention is generally indicated in a first embodiment thereof with the number 10.

The bowl 10 includes
- a supporting tray 11 with a containment recess 12,
- and a removable covering tray 13, which is contoured to cover the entire containment recess 12 and is adapted to contain solid or liquid food for an animal; such a removable tray 13 is shaped complementarily with respect to the surface of the containment recess 12.

The supporting tray 11 is made of metallic material and preferably aluminium.

The removable covering tray 13 is made of non-toxic plastic material.

Such removable covering tray 13 is advantageously transparent or semitransparent so that the animal approaching it can see and recognize the supporting tray 11 anyway, so that it can consider it as 'its bowl', keeping unaltered the perception of the same, even though changing the removable covering trays placed above.

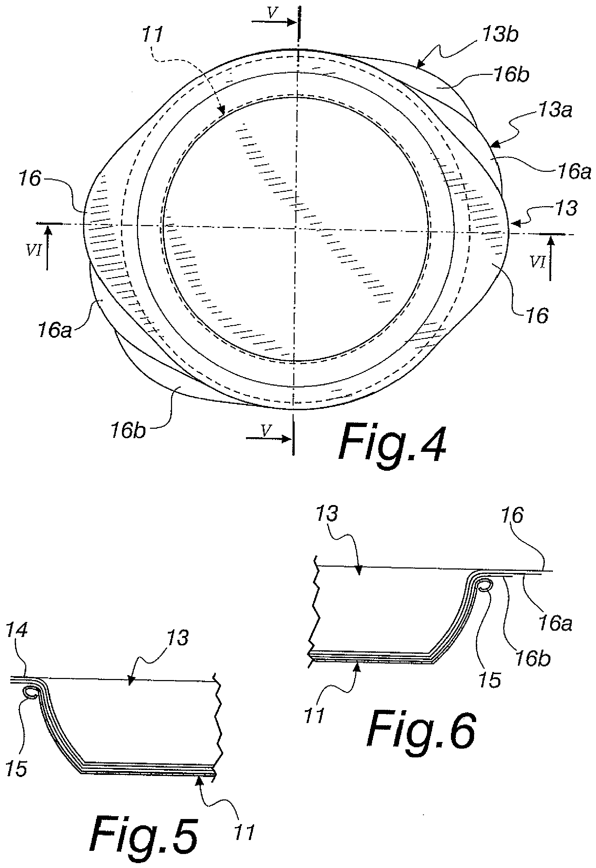

The removable covering tray 13 has a perimetric flap 14 for resting on the rim 15 of said supporting tray 11. The rim 15 or 115, as shown in Figure 5, is suitably bevelled or folded to prevent an animal or user from being hurt by manipulating it improperly.

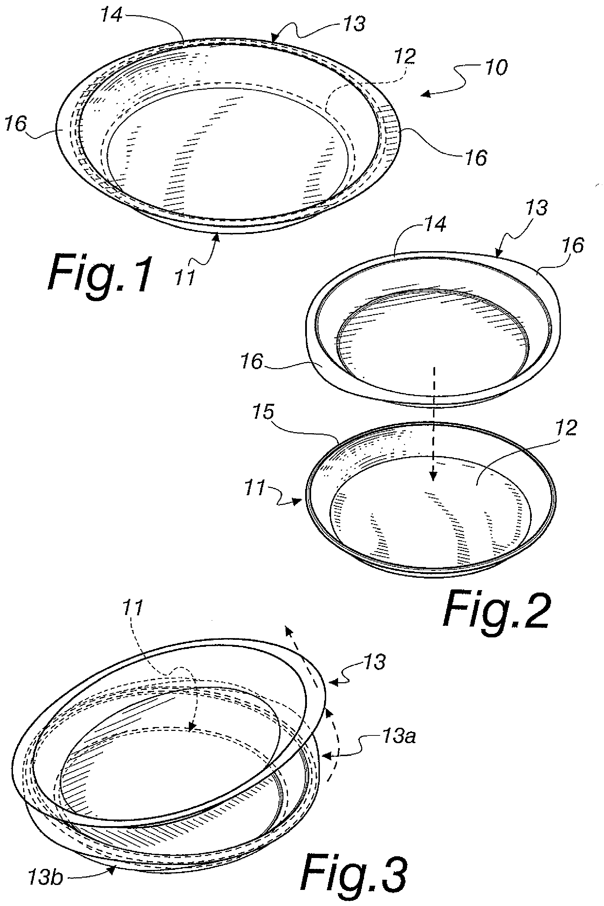

At least one lateral grip tab 16 extends radially outward from said perimetric flap, such as two lateral tabs 16 as in Figures 1 to 4.

Advantageously, the bowl according to the invention may comprise a plurality of removable covering trays 13, 13a, 13b mutually stacked, as shown in Figures 3 and 4, and angularly offset so that the corresponding lateral grip tab 16, 16a, 16b of each one is at least partially free and available for grip.

The bowl according to the invention 10 therefore provides that the removable covering tray 13 is filled with food for an animal, and is thrown away after a meal.

Thus, the supporting tray 11 is always clean, never coming into contact with the food or coming into direct contact with the muzzle of the animal.

Such a bowl 10 therefore avoids all the long and complex cleaning and maintenance operations typical of the known metal bowls, without compromising the robustness and hygiene of the metal bowls.

Furthermore, thanks to the removable tray 13, the supporting tray 11 can also be used in an external environment, both with cold and particularly hot climates, since the removable plastic tray, placed over the metal tray, mitigates the feeling of cold or heat of the same.

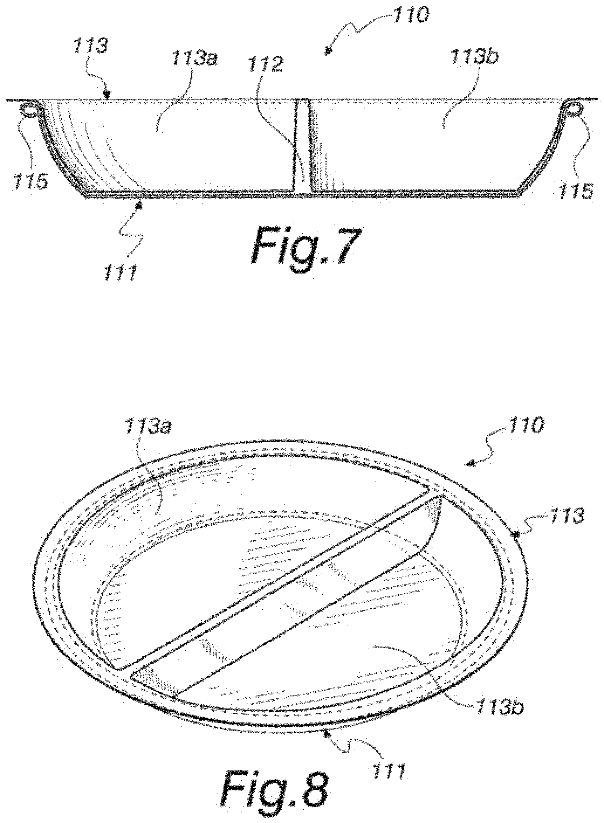

In a second embodiment of the bowl according to the invention, shown in FIGS. 7 and 8 with the number 110, this bowl 110 comprises a supporting tray 111 and a removable covering tray 113 on which two containment recesses 113a and 113b are formed, each of which is contoured to occupy a part of said containment recess 112.

A first containment recess 133a of the removable tray 113 may be provided for containment of water and the second recess 113b may be filled with food.

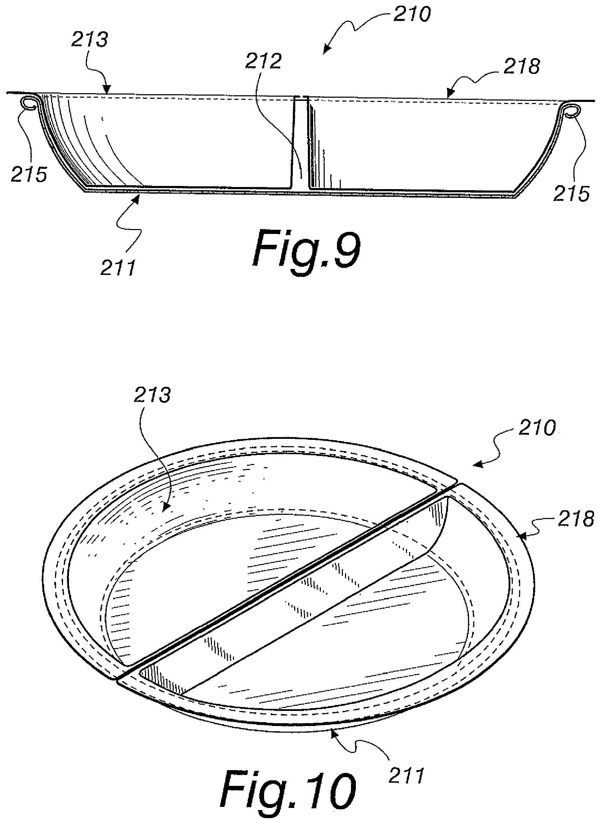

In a third embodiment of the bowl according to the invention, shown in FIGS. 9 and 10 with the number 210, said bowl 210 comprises a supporting tray 211 and two removable covering trays 213 and 218, each of which is contoured to occupy a part of said containment recess 212.

In particular, the two trays 213, 218 are complementary, i.e., occupy the entire containment recess 212 when placed side by side; in particular, and conveniently from a productive point of view, may be equal to each other.

A first removable tray 213 can be used for containment of water and the second removable tray 218 may be filled with food.

Since the two trays 213 and 218 are independent, when the food or water is finished, one tray can be removed leaving the other one in the supporting tray 211.

With this bowl 110 and 210, a single metal tray is used to contain both water and food.

It has been found in practice that the invention achieves the intended aim and purposes.

In particular, the invention provides a simple and quick handling bowl for feeding animals, which eliminates most of the cleaning and maintenance operations required by the known metal bowls.

In addition, the invention provides a bowl less sensitive to outside environmental conditions when used outdoors. In addition, the invention provides a bowl that can easily be handled in an intuitive way.

The so-conceived invention is susceptible to numerous modifications and variations, all within the scope of the inventive concept; moreover, all details may be replaced by other technically equivalent elements.

In practice, the components and materials employed, as long as they are suitable for the specific use, as well as the dimensions and the contingent shapes, may be different according to requirements and state of the art.

Where the features and techniques mentioned in any of the claims are followed by reference numerals, these numerals are intended to improve the intelligibility of the claims only, and consequently such reference numerals have no limiting effect on the interpretation of each element identified by way of example by these reference numerals.

## Claims

1. A bowl (10) for feeding animals **characterized in that** it comprises
- a supporting tray (11) with a containment recess (12),
- at least one removable covering tray (13), which is contoured to cover at least part of said containment recess (12) and is adapted to contain solid or liquid food for an animal.

2. The bowl according to claim 1, **characterized in that** said supporting tray (11) is made of metallic material and preferably aluminium.

3. The bowl according to one or more of the preceding claims, **characterized in that** said removable covering tray (13) is made of non-toxic plastic material

4. The bowl according to the preceding claim, **characterized in that** said removable covering tray (13) is shaped complementarily with respect to the surface of the containment recess (12).

5. The bowl according to the preceding claim, **characterized in that** said removable covering tray (13) is transparent or semitransparent.

6. The bowl according to one or more of the preceding claims, **characterized in that** the removable covering tray (13) is provided with a perimetric flap (14) for resting on the rim (15) of said supporting tray (11).

7. The bowl according to one or more of the preceding claims, **characterized in that** at least one lateral grip tab (16) extends radially outward from said perimetric flap.

8. The bowl according to one or more of the preceding claims, **characterized in that** it comprises a plurality of removable covering trays (13, 13a, 13b) mutually stacked and angularly offset so that the corresponding lateral grip tab (16, 16a, 16b) of each one is at least partially free and available for grip.

9. The bowl according to one or more of claims 1 to 3 and 5 to 7, **characterized in that** it comprises a removable covering tray (113) on which two containment recesses (113a, 113b) are formed.

10. The bowl according to one or more of claims 1 to 3 and 5 to 7, **characterized in that** it comprises two removable covering trays (213, 218), each of which is contoured to occupy a part of said containment recess (212).
